Europäisches Patentamt

European Patent Office

Office européen des brevets

(19)

(11) Numéro de publication: **0 261 027**
**A1**

(12) **DEMANDE DE BREVET EUROPEEN**

(21) Numéro de dépôt: 87402048.0

(22) Date de dépôt: 15.09.87

(51) Int. Cl.⁴: **H 04 N 1/10**
**H 04 N 1/028**

(30) Priorité: 17.09.86 FR 8612995

(43) Date de publication de la demande:
23.03.88 Bulletin 88/12

(84) Etats contractants désignés:
AT BE CH DE FR GB IT LI LU NL SE

(71) Demandeur: CENTAURE ROBOTIQUE Sarl
42-44 Rue des Meuniers
F-93100 Montreuil (FR)

(72) Inventeur: Primat, Didier
15 chemin du Bois Caran
Collonge Bellerive Genève (CH)

Beauvois, Jacques
3 places des Vosges
F-75004 Paris (FR)

Basset, Frédéric
33 rue Frémicourt
F-75015 Paris (FR)

Bouin, Thierry
20 route de Nogent
F-78130 Bourbonne (FR)

Billiotte, Jean-Marie
8 place des Fédérés
F-93160 Noisy le Grand (FR)

(74) Mandataire: Pinguet, André
CAPRI 28 bis, avenue Mozart
F-75016 Paris (FR)

(54) **Dispositif de lecture optique sans objectif.**

(57) Un dispositif de lecture optique d'un document ayant un support transparent comporte notamment :
- un plateau plan transparent (2) pour supporter le document (3) ;
- une tête de lecture optique (7) comprenant un capteur (10), du type CD par exemple, avantageusement linéaire, et un patin pneumatique (9) glissant sur le plateau (2) ledit capteur étant logé dans un évidement (12) dudit patin ouvrant sur sa surface d'appui ; et,
- un système d'éclairage (20, 15, 16, 17) pour éclairer au moins une partie de la scène (3), l'organe de lecture optique (7) et le système d'éclairage (15, 16, 17) étant disposés de part et d'autre du plateau (2).

Ce dispositif a une vitesse d'acquisition très élevée, il est autoréglable et est d'un coût réduit par rapport aux réalisations de l'art antérieur. Son grossissement est constant et égal à un.

Figure Unique

**Description**

DISPOSITIF DE LECTURE OPTIQUE SANS OBJECTIF

La présente invention a pour objet un dispositif de lecture optique d'une scène constituée par un ensemble de signes quelconques présentés sur un support transparent.

Dans de nombreux secteurs d'activité, il est nécessaire de traiter des ensembles de signes, graphiques ou autres (textes, dessins, photographies, etc.), lisibles sur un support plan opaque ou transparent, tels qu'une feuille de papier ou un film de matière plastique, par exemple. De façon usuelle, le traitement que l'on fait subir à ces ensembles de signes a essentiellement pour but de numériser leur image, d'en modifier la présentation et/ou d'en tirer des renseignements particuliers.

Dans le domaine de l'imprimerie par exemple, on utilise typiquement ce type de traitement pour la mise en page de textes et d'illustrations lors de conception des livres et des journaux. En ce qui concerne ces derniers, notamment les journaux quotidiens, la mise en page impose des contraintes particulières dans la mesure où elle doit pouvoir être faite rapidement et être modifiée quasi instantanément pour tenir compte des évènements dignes d'intérêt susceptibles de se produire juste avant le dernier tirage.

Un autre domaine où l'on est mené à pratiquer couramment ce type de traitement est celui de l'industrie des circuits imprimés. Très généralement, les circuits imprimés sont obtenus par gravure chimique des parties insolées d'une mince couche de cuivre collée sur un matériau isolant et recouverte d'une pellicule photosensible. Le cuivre est insolé au travers d'un cliché formant masque, constitué d'un film transparent, sur lequel les parties conductrices (ou les parties isolantes) du circuit à fabriquer sont figurées par des zones opaques. Si, pour quelque raison que ce soit, on veut fabriquer des circuits imprimés présentant des variantes ou des modifications par rapport à un circuit imprimé dont on possède le cliché, on élabore un nouveau cliché à partir de ce cliché initial que l'on soumet donc à un traitement du type évoqué plus haut dans sa généralité.

Jusqu'à une époque assez récente, pour modifier ou remanier un document ayant comme support une feuille faite d'un matériau quelconque, on opérait directement sur ce support. Actuellement, pour des raisons de rapidité et de fiabilité, on recourt le plupart du temps à des machines gérées par ordinateurs, lesquelles permettent, entre autres facilités, de travailler sans considération de support matériel. Naturellement, comme les ordinateurs ne travaillent que sur des données numériques, le traitement informatique d'un document est nécessairement précédé de la digitalisation des signes qui le composent. Et cette digitalisation elle-même est consécutive à l'acquisition desdits signes, sous forme de données analogiques, par des dispositifs à capteur optique.

Actuellement, deux types de dispositif à capteur optique sont principalement employés pour faire l'acquisition de signes lisibles sur un support plan. Par la suite, on désignera parfois sous le vocable de "scène" l'ensemble constitué par des signes lisibles et leur support.

Un premier dispositif d'acquisition optique qui est approprié à la lecture de documents sur support souple, comporte un tambour sur lequel la scène à acquérir est assujettie, par exemple au moyen d'un système d'aspiration créant une forte dépression à l'intérieur dudit tambour. Parallèlement à l'axe du tambour est disposé un rail de guidage rectiligne sur lequel peut se déplacer un émetteur récepteur de rayon laser. En fonctionnement, le tambour tourne à vitesse constante. L'émetteur récepteur se déplace à vitesse constante le long du rail et le rayon laser, dont l'extrémité décrit sur le tambour une spirale à spires jointives, est modulé par les signes présents sur la feuille assujettie au tambour. Ce dispositif présente l'inconvénient de ne pouvoir lire que des documents ayant un support souple et d'avoir une vitesse d'acquisition limitée (de l'ordre de 400 KHz). On ne peut, en effet, augmenter la vitesse de rotation du tambour au-delà du seuil ou, sous l'action des forces centrifuges, il se déforme (effet dit "de tonneau").

Un second type de dispositif d'acquisition optique de scène plane est constitué par une platine mobile parallèllement à un axe X-X', au-dessus de laquelle est disposé un rail fixe servant au guidage d'un chariot parallèllement à un axe Y-Y', les axes X-X' et Y-Y' étant perpendiculaires. La scène à acquérir est assujettie à la platine. Le chariot supporte un système d'acquisition optique comportant un capteur, un objectif pour faire la mise au point du capteur sur la scène et une source de lumière pour éclairer la zone de la scène lue par le capteur. De façon courante, les capteurs utilisés sont du type CCD (i.e., à transfert de charge), soit linéaires (c'est-à-dire constitués d'éléments photosensibles disposés sur une seule ligne), soit matriciels (c'est-à-dire constitués d'éléments photosensibles disposés sur m lignes et n colonnes). Les capteurs linéaires présentent sur les capteurs matriciels l'avantage d'être moins coûteux et de permettre le balayage de la scène à vitesse constante. Les dispositifs de ce second type, un particulier ceux qui comportent un capteur linéaire, ont une vitesse d'acquisition très élevée (de l'ordre de 20 MHz) et peuvent lire avec une grande fidélité tous types de documents, y compris ceux dont le support est rigide (verre, par exemple). Il va de soi que cette rapidité et cette fidélité résultent de la mise en oeuvre de systèmes mécaniques (organes de guidage et d'entraînement de la platine et du chariot, par exemple) et optiques (objectif, etc.) à la fois très précis et très performants qui sont par conséquent aussi très coûteux. Ces dispositifs présentent en outre l'inconvénient d'être assez volumineux et d'exiger des réglages nombreux et fréquents.

La présente invention a pour objet un dispositif de lecture optique pour l'acquisition de documents à support transparent, qui ait une vitesse d'acquisition comparable à celle des dispositifs à capteur linéaire existants, mais qui soit à la fois compact, de structure relativement simple, d'un coût très inférieur à celui des dispositifs connus de l'art antérieur, absolument inderéglable, et de grossissement très précis.

La présente invention se rapporte aux dispositifs de lecture optique d'une scène, constituée par un ensemble de signes quelconques présentés sur un support transparent, lequel dispositif comporte de façon traditionnelle :

- un plateau sensiblement plan pour supporter la scène ;

- un organe de lecture optique pour faire l'acquisition de la scène ;

- un organe moteur pour déplacer l'organe de lecture optique dans un plan parallèle au plateau ;

- un système d'éclairage pour éclairer au moins une partie de la scène.

Le dispositif selon l'invention est remarquable par le fait, qu'en outre :

- le plateau est transparent ;

- l'organe de lecture optique et le système d'éclairage sont disposés de part et d'autre du plateau ; et,

- l'organe de lecture optique comporte un capteur et un patin pneumatique pour glisser sur le plateau, ledit capteur étant logé dans un évidement dudit patin ouvrant sur sa surface d'appui.

Selon une caractéristique de l'invention, le grossissement de l'organe de lecture optique est constant et est égal à un.

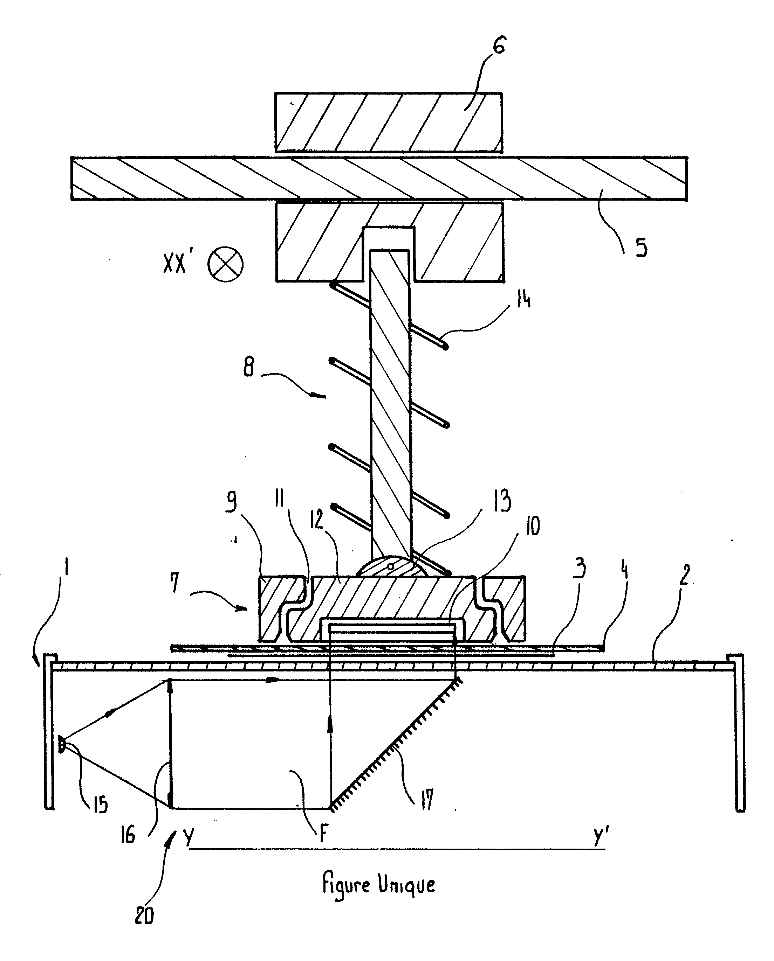

D'autres caractéristiques et avantages de la présente invention apparaîtront mieux à la lecture de la description qui va suivre, faite en relation avec la figure unique, sur laquelle on a représenté une vue en coupe schématique partielle du dispositif de lecture optique selon l'invention.

Le dispositif de lecture optique, représenté sur la figure, comporte une platine 1 ayant la forme d'un caisson parallélépipédique dont le plateau supérieur 2 est transparent et sert de support à un document 3 dont on veut faire l'acquisition. Le document 3 est maintenu plaqué qur le plateau transparent 2, par exemple au moyen d'une plaque transparente 4 de faible épaisseur, laquelle adhère au plan 2 sous l'effet d'une dépression créée entre ledit plan et ladite plaque. La platine 1 est mobile parallèlement à un axe X-X'. Elle est surplombée par un rail 5 servant au guidage d'un chariot mobile 6 parallèlement à un axe Y-Y' perpendiculaire à l'axe X-X'. Le chariot 6 est l'élément moteur d'une tête de lecture optique 7, à laquelle il est relié par un bras 8. La tête de lecture 7 comporte essentiellement un patin pneumatique 9 et un capteur 10 avantageusement du type CCD, linéaire ou matriciel. Le patin pneumatique 9 est constitué par un bloc de métal, ayant par exemple la forme d'un tronc de cylindre, dont la surface d'appui est parfaitement plane. Le patin 9 comporte une série de canaux 11 débouchant à la périphérie de sa surface d'appui et servant de conduits à de l'air comprimé. Il comporte en outre un évidement 12 débouchant sur sa surface d'appui et destiné au logement du capteur 10. Le bras 8 ne relie pas la tête de lecture 7 au chariot 6 de façon rigide. Il comporte une articulation 13, située soit au niveau du patin 9 (cas de la figure), soit au niveau du chariot 6, permettant une légère modification de l'assiette du patin 9 par rapport à la plaque 4. Il comporte en outre des moyens élastiques, schématisés sur la figure par un ressort 14, lesquels font pression sur le patin 9 et sont calculés pour équilibrer la poussée ascendante que lui communique l'air comprimé. L'intérêt de ce système est qu'il est autoréglable. Pourvu que les orifices des canaux 11, situés au niveau de la surface d'appui du patin 7 soient régulièrement répartis, la distance séparant ladite surface de la plaque 4 reste constante (de l'ordre de quelques microns). En outre, le déplacement de la tête de lecture 7 sur la platine 1 se fait absolument sans frottements.

On comprendra que la présence de la plaque 4 n'est pas obligatoire. Selon une autre variante, la tête 7 peut directement être déplacée en regard du document 3 du fait du non contact assuré par le film d'air.

Dans cette dernière variante, on conçoit que l'articulation 13 permet de s'affranchir des ondulations locales du document 3.

La présence du patin 9 au contact de la platine ne permet pas d'éclairer la zone du document 3 lue par le capteur 10 par le dessus. Comme cela se fait dans certains dispositifs à capteur linéaire ou matriciel connus, on prévoit d'éclairer ladite zone par le dessous, le plateau supérieur 2 de la platine 1 étant transparent à cette fin. On dispose donc à l'intérieur du caisson formé par la platine 1 un système d'éclairage 20.

Selon une première variante décrite sur la figure, recommandée par l'invention, le système d'éclairage 20 est mobile. Son mouvement est asservi à celui de la tête de lecture 7 par rapport à ladite platine. Typiquement, ce système d'éclairage 20 comporte une source de lumière 15, un miroir 17 réfléchissant la lumière émise par la source 15 vers le plateau 2 et une lentille convexe 16 focalisant la lumière émise par la source 15 sur le miroir 17. Préférentiellement, la source de lumière 15 et la lentille 16 sont fixes et le miroir 17 mobile par rapport à la platine 1. Avantageusement, on met en place un système d'éclairage 20 du type émettant un faisceau F sensiblement parallèle de lumière en direction de la scène 3. L'intérêt de cette solution est de s'assurer que l'image perçue par le capteur est l'ombre représentative des signes du document. On comprend en effet qu'un faisceau divergent diminuerait la précision de l'image du fait de la distance entre le document 3 et le capteur 10.

Une méthode recommendée par l'invention pour parvenir à ce résultat consiste à placer sensiblement la source lumineuse 15 au foyer de la lentille 16.

Une autre variante de mise en oeuvre du procédé d'éclairage selon l'invention, non représentée, peut consister à utiliser un système d'éclairage fixe et à émettre à l'aide de celui-ci un flux longiligne de lumière, sensiblement homogène, parallèlement à l'axe de déplacement Y-Y' de l'organe de lecture optique 7. Cette variante peut être notamment obtenue en utilisant un ou plusieurs tubes fluorescents fixes disposés parallèlement à l'axe Y-Y' de déplacement et en dessous du plateau transparent 2.

Selon l'invention, on fixe le capteur 10 dans l'évidement 12 du patin 9 de façon qu'il soit suffisamment proche de la scène 3 (distance de l'ordre de un à deux millimètres) pour que la divergence de la lumière soit inférieure aux dimensions d'un élément photosensible (pixel) dudit capteur. Pour fixer les idées, les capteurs linéaires CCD disponibles sur le marché actuellement sont formés de pixels de forme sensiblement carrée et d'environ treize microns de côté. La réalisation des capteurs CCD est obtenue par technologie CMOS. Sa précision de réalisation des pixels est très grande. Le grandissement du système optique obtenu étant par construction égal à un, on comprend qu'un des avantages du système est d'avoir une précision de grossissement très grande.

Le dispositif de lecture optique qui vient d'être décrit présente de nombreux avantages au rang desquels on peut citer :

- une très grande rapidité d'acquisition (supérieur à 20 MHz),

- une simplicité d'utilisation accrue par rapport aux réalisations de l'art antérieur, due en particulier à la réduction du nombre des réglages nécessaires au fonctionnement,

- une simplicité de conception qui se traduit par une économie de moyens, (en particulier, ce dispositif ne comporte pas d'objectif pour faire la mise au point du capteur sur la scène),

- un grossissement absolument constant et égal à un,

- un encombrement réduit,

- un coût de fabrication modeste dû à sa simplicité de conception.

La présente invention n'est pas limitée aux exemples de réalisation qui viennent d'être décrits ; elle est au contraire susceptible de variantes et de modifications qui apparaîtront à l'homme de l'art. En particulier, le mouvement de la tête de lecture 7 par rapport au plateau 2 peut être commandé par d'autres moyens que ceux qui ont été décrits : on peut, par exemple, prévoir que la tête de lecture 7 sera fixe et la platine 1 mobile selon deux axes perpendiculaires ou encore que le chariot 6 sera mobile selon deux axes perpendiculaires et la platine 1 fixe. D'autre part, si l'orientation du dispositif selon l'invention a été rapportée, dans la description comme sur le dessin, à des axes verticaux et horizontaux, il va de soi que ledit dispositif peut occuper toutes les positions dans l'espace.

L'invention ayant maintenant été décrite et son intérêt justifié sur un exemple détaillé, les demandeurs s'en réservent l'exclusivité, pendant toute la durée du brevet, sans limitation autre que celle des termes des revendications ci-après.

## Revendications

1. Dispositif de lecture optique d'une scène (3) constituée par un ensemble de signes quelconques présentés sur un support transparent, ledit dispositif comportant notamment :

-un plateau plan (2) pour supporte la scène (3) ;

-un organe de lecture optique (7) pour faire l'acquisition de la scène (3) ;

- un organe moteur (1, 6) pour déplacer l'organe de lecture optique (7) dans un plan parallèle au plateau (2) ;

- un système d'éclairage (20,15,16,17) pour éclairer au moins une partie de la scène (3) ;

ledit dispositif optique étant caractérisé en ce que :

- le plateau (2) est transparent ;

- l'organe de lecture optique (7) et le système d'éclairage (15, 16, 17) sont disposés de part et d'autre du plateau (2) ; et,

- l'organe de lecture optique comporte un capteur (10) et un patin pneumatique (9) pour glisser sur le plateau (2), ledit capteur étant logé dans un évidement (12) dudit patin ouvrant sur sa surface d'appui.

2. Dispositif de lecture optique selon la revendication 1, caratérisé en ce que le grossissement de son organe de lecture (7) est constant et est égal à un.

3. Dispositif de lecture optique selon la revendication 1 ou 2, caractérisé en ce que le capteur (10) de son organe de lecture (7) est un capteur CCD linéaire.

4. Dispositif de lecture optique selon la revendication 1 ou 2, caractérisé en ce que le capteur (10) de son organe de lecture (7) est un capteur CCD matriciel.

5. Dispositif de lecture optique selon l'une des revendications précédentes, caractérisé en ce que son système d'éclairage (20) est du type émettant un faisceau (F) sensiblement parallèle de lumière en direction de la scène (3).

6. Dispositif de lecture optique selon l'une des revendications précédentes, où le système d'éclairage comporte une source de lumière (15), un miroir (17) pour réfléchir la lumière émise par la source (15) vers le plateau (2) et une lentille notamment convexe (16) pour focaliser la lumière émise par la source (15) sur le miroir (17), caractérisé en ce que la source de lumière (15) et la lentille (16) sont fixes par rapport au plateau (2) et en ce que le miroir (17) est mobile par rapport au plateau (2) et est asservi au mouvement de l'organe de lecture (7).

7. Dispositif de lecture optique, selon les revendications 5 et 6 précédentes, caractérisé en ce que la source (15) est située sensiblement au foyer de la lentille (16).

8. Dispositif de lecture optique, selon l'une des revendications précédentes, caractérisé en ce que son système d'éclairage (20) est fixe et émet un flux longiligne de lumière sensiblement homogène parallèlement à l'axe de déplacement (Y-Y') de l'organe de lecture optique (7).

9. Dispositif de lecture optique selon l'une des revendications précédentes, caractérisé en

**0 261 027**

ce que le patin pneumatique (9) est assujetti à l'organe moteur (6) par un bras (8) comportant une articulation (13) pour permettre une modification de l'assiette dudit patin et des moyens élastiques (14) pour équilibrer la poussée pneumatique exercée sur la surface d'appui dudit patin.

10. Dispositif de lecture optique selon l'une des revendications précédentes,

ledit dispositif étant caractérisé en ce que son plateau (2) comporte des moyens d'assujettissement de la scène (3) comprenant une plaque (4) transparente, pour plaquer ladite scène sur ledit plateau en la prenant en sandwich entre ladite plaque et ledit plateau et le patin (9) de l'organe de lecture (7) glisse sur ladite plaque.

0261027

figure Unique

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-2 168 216 (CANON K.K.) <br> * Figures 1-4; page 1, lignes 7-14,17,18; page 2, lignes 43-48; page 3, lignes 44-49 * <br> --- | 1-4,10 | H 04 N 1/10 <br> H 04 N 1/028 |
| A | PATENT ABSTRACTS OF JAPAN, vol. 6, no. 159 (P-136) [1037], 20 aôut 1982; & JP-A-57 78 539 (TOYO INK SEIZO K.K.) 17-05-1982 <br> --- | 1-5 | |
| A | US-A-4 216 378 (W. MONETTE) <br> * En entier * <br> --- | 1 | |
| A | EP-A-0 121 975 (FERIX CORP.) <br> * En entier * <br> ----- | | |

DOMAINES TECHNIQUES RECHERCHES (Int. Cl.4)

G 02 B 27/02
H 04 N 1/10
H 04 N 1/028

Le présent rapport a été établi pour toutes les revendications

| Lieu de la recherche | Date d'achèvement de la recherche | Examinateur |
|---|---|---|
| LA HAYE | 15-11-1987 | WESBY P.B. |